# EUROPÄISCHE PATENTANMELDUNG

(11) **EP 4 834 648 A1**
(43) Veröffentlichungstag der Anmeldung: **04.11.2026**
(21) Anmeldenummer: 26172413.2
(22) Anmeldetag: 15.04.2026
(51) Int. Cl.: B60L 53/68, B60L 53/64, B60L 53/65, B60L 53/66, G01C 21/34

(54) **SYSTEM UND VERFAHREN ZUM ÜBERWACHEN EINER REGELKONFORMEN AUFNAHME UND/ODER EINES REGELKONFORMEN VERBRAUCHS EINES ENERGIETRÄGERS IN EINER GEOGRAPHISCHEN ZONE**

(30) Priorität: 16.04.2025 DE 102025114912
(71) Anmelder: Robert Bosch GmbH, 70442 Stuttgart (DE)
(72) Erfinder: Wostradowski, Uwe, 71263 Weil Der Stadt-Merklingen (DE); Babic, Marko, 74379 Ingersheim (DE); Storch, Michael, 71254 Ditzingen (DE); Karaca, Cem, 70736 Fellbach (DE)

(57) **Zusammenfassung**

Offenbart sind Systeme und Verfahren zum Überwachen einer regelkonformen Aufnahme und/oder eines regelkonformen Verbrauchs eines Energieträgers in einer ersten geographischen Zone durch ein Fahrzeug, das in der ersten geographischen Zone zugelassen ist zum Betrieb gemäß einem ersten Regelwerk, das für das Fahrzeug in der ersten geographischen Zone in Kraft ist. Das Verfahren umfasst: Speichern von Massen einer ersten geographischen Zone; Speichern von einer von mehreren ersten Regeln des ersten Regelwerks; Erfassen einer Vielzahl von Positionen eines Fahrzeugs und einer Vielzahl von Zeiten, wobei jede Position der Vielzahl von Positionen mit jeweils einer Zeit der Vielzahl von Zeiten verknüpft ist, und wobei zumindest eine Position der Vielzahl von Positionen außerhalb der ersten geographischen Zone liegt; Speichern der Vielzahl von Positionen und der Vielzahl von Zeiten als eine Historie des Fahrzeuges; Bestimmen, basierend auf der Historie des Fahrzeuges, einer ersten Energiemenge einer ersten Energiekategorie, die im Fahrzeug an einer ersten Position zu einer ersten Zeit gespeichert ist; Bestimmen, basierend auf der Historie des Fahrzeuges, einer zweiten Energiemenge einer zweiten Energiekategorie, die im Fahrzeug an einer zweiten Position zu einer zweiten Zeit gespeichert ist; Bestimmen, basierend auf der ersten Energiemenge, der zweiten Energiemenge und der Historie des Fahrzeuges, ob eine Regel der einen oder der mehreren ersten Regeln des ersten Regelwerks während eines Betriebs des Fahrzeuges in der ersten geographischen Zone eingehalten worden ist oder nicht.

## Beschreibung

Die vorliegende Erfindung betrifft ein System und ein Verfahren zum Überwachen einer regelkonformen Aufnahme und/oder eines regelkonformen Verbrauchs eines Energieträgers in einer geographischen Zone durch ein Fahrzeug, das zum Betrieb innerhalb und außerhalb der geographischen Zone konfiguriert ist.

### Stand der Technik

Erneuerbare Energieträger wie etwa CO₂-neutraler Kraftstoff, der mit Hilfe von erneuerbarer Energie hergestellt wird, oder CO₂-neutral erzeugte elektrische Energie, lassen sich als solche nicht von herkömmlichen Energieträgern unterscheiden. Für einen Verbraucher wie etwa einen potenziellen Käufer oder einen Nutzer eines Fahrzeuges und/oder eine Autorität, die einen Betrieb von Fahrzeugen in einer geographischen Zone regelt, kann es wünschenswert sein zu bestimmen, ob und in welchem Maß eine regelkonformen Aufnahme und/oder ein regelkonformen Verbrauch eines Energieträgermediums durch ein Fahrzeug vorliegt.

Aus der Druckschrift DE 102018205430 A1 sind Verfahren zum Ermitteln einer Position eines Fahrzeugs bekannt. Fahrzeuge können Energieträger jedoch an Tankstellen oder Ladestationen innerhalb und außerhalb einer geographischen Zone aufnehmen und/oder verbrauchen, so dass eine Bestimmung, ob Regeln in einer geographischen Zone durch einen Nutzer eines Fahrzeuges eingehalten worden sind oder nicht durch einen Betrieb des Fahrzeugs sowohl innerhalb als auch außerhalb der geographischen Zone erschwert wird.

### Offenbarung der Erfindung

Die Erfindung stellt ein System und ein Verfahren zum Überwachen einer regelkonformen Aufnahme und/oder eines regelkonformen Verbrauchs eines Energieträgers in einer geographischen Zone durch ein Fahrzeug mit den Merkmalen der unabhängigen Patentansprüche bereit. Bevorzugte Ausführungsformen sind Gegenstand der jeweiligen Unteransprüche.

Gemäß einem ersten Aspekt betrifft die Erfindung ein Verfahren zum Überwachen einer regelkonformen Aufnahme und/oder eines regelkonformen Verbrauchs eines Energieträgers in einer ersten geographischen Zone durch ein Fahrzeug, das in der ersten geographischen Zone zugelassen ist zum Betrieb gemäß einem ersten Regelwerk, das für das Fahrzeug in der ersten geographischen Zone in Kraft ist. Das Verfahren umfasst: Speichern von Massen einer ersten geographischen Zone; Speichern von einer von mehreren ersten Regeln des ersten Regelwerks; Erfassen einer Vielzahl von Positionen eines Fahrzeugs und einer Vielzahl von Zeiten, wobei jede Position der Vielzahl von Positionen mit jeweils einer Zeit der Vielzahl von Zeiten verknüpft ist, und wobei zumindest eine Position der Vielzahl von Positionen außerhalb der ersten geographischen Zone liegt; Speichern der Vielzahl von Positionen und der Vielzahl von Zeiten als eine Historie des Fahrzeuges; Bestimmen, basierend auf der Historie des Fahrzeuges, einer ersten Energiemenge einer ersten Energiekategorie, die im Fahrzeug an einer ersten Position zu einer ersten Zeit gespeichert ist; Bestimmen, basierend auf der Historie des Fahrzeuges, einer zweiten Energiemenge einer zweiten Energiekategorie, die im Fahrzeug an einer zweiten Position zu einer zweiten Zeit gespeichert ist; Bestimmen, basierend auf der ersten Energiemenge, der zweiten Energiemenge und der Historie des Fahrzeuges, ob eine Regel der einen oder der mehreren ersten Regeln des ersten Regelwerks während eines Betriebs des Fahrzeuges in der ersten geographischen Zone eingehalten worden ist oder nicht.

Gemäß einer Weiterbildung umfasst das Erfassen ein Erfassen einer ersten Position des Fahrzeugs beim Verlassen der ersten geographischen Zone.

Gemäß einer Weiterbildung umfasst das Erfassen ein Erfassen einer zweiten Position des Fahrzeugs beim Eintreten in die erste geographische Zone.

Gemäß einer Weiterbildung umfasst das Erfassen ein Erfassen einer dritten Position des Fahrzeugs an einer Vorrichtungen zum Übertragen von Energie an ein Fahrzeug.

Gemäß einer Weiterbildung liegt die Position der Vorrichtungen zum Übertragen von Energie an ein Fahrzeug innerhalb oder außerhalb der ersten geographische Zone.

Liegt die Position der Vorrichtung zum Übertragen von Energie an ein Fahrzeug außerhalb der ersten geographischen Zone, kann es sein, dass diese Zone, beispielsweise die zweite geographische Zone, als Zone gilt, in welcher nur fossile Energieträger zur Verfügung stehen. Bei einer Aufnahme des Energieträgers durch das Fahrzeug, beispielsweise durch einen Betankungsvorgang, in der entsprechenden Zone gilt dann die gesamte aufgenommene Menge des Energieträgers als nicht erneuerbar bzw. fossil. Die übertragene Energie wird somit als fossile Energie kategorisiert. Beim Wiedereintreten des Fahrzeugs in die erste geographische Zone kann es somit passieren, dass durch den Betankungsvorgang außerhalb der ersten geographischen Zone eine Regel des Regelwerks nicht eingehalten wurde.

Gemäß einer Weiterbildung erfolgt das Erfassen durch das Fahrzeug und/oder durch eine Vorrichtungen zum Übertragen von Energie und/oder durch eine zellulare Kommunikationsvorrichtung und/oder durch einen satellitengestützte Kommunikationsvorrichtung.

Gemäß einer Weiterbildung wird die Historie des Fahrzeuges basierend auf dem Erfassen in einer oder in mehreren Vorrichtungen zusammengeführt, insbesondere im Fahrzeug und/oder in einer Cloud.

Gemäß einer Weiterbildung umfasst das Verfahren, in Antwort auf eine Bestimmung, dass die erste Energiemenge kleiner ist als die zweite Energiemenge: Bestimmen, dass die erste Energiemenge und/oder die zweite Energiemenge gemäß dem ersten Regelwerk zum Verfolgen der Historie des Betriebs des Fahrzeuges innerhalb und/oder außerhalb der ersten geographischen Zone herangezogen wird; oder Bestimmen, dass die erste Energiemenge und/oder die zweite Energiemenge gemäß dem ersten Regelwerk nicht zum Verfolgen der Historie des Betriebs des Fahrzeuges innerhalb und/oder außerhalb der ersten geographischen Zone herangezogen wird.

Gemäß einem zweiten Aspekt betrifft die Erfindung ein computerlesbares Speichermedium, das darauf gespeicherte Instruktionen umfasst, die, wenn sie durch einen oder durch mehrere Prozessoren eines Systems ausgeführt werden, das System dazu veranlassen eines der oben beschriebenen Verfahren durchzuführen.

Gemäß einem dritten Aspekt betrifft die Erfindung ein System, wobei das System umfasst: ein Fahrzeug, das in der ersten geographischen Zone zugelassen ist zum Betrieb gemäß einem ersten Regelwerk, das für das Fahrzeug in der ersten geographischen Zone in Kraft ist; eine oder mehrere Steuervorrichtungen mit einem oder mit mehreren Prozessoren; und das oben beschriebene computerlesbare Speichermedium.

### Kurze Beschreibung der Zeichnungen

Es zeigt:
- Figur 1: eine schematische Darstellung einer Vielzahl geographischer Zonen zwischen welchen sich ein Fahrzeug bewegt sowie ein oder mehrere Systeme zum Überwachen einer regelkonformen Aufnahme und/oder eines regelkonformen Verbrauchs eines Energieträgers in einer der geographischen Zonen durch das Fahrzeug
- Figur 2: eine schematische Darstellung eines Verfahrens zum Überwachen einer regelkonformen Aufnahme und/oder eines regelkonformen Verbrauchs eines Energieträgers in einer der geographischen Zonen durch ein Fahrzeug

In allen Figuren sind gleiche bzw. funktionsgleiche Elemente und Vorrichtungen mit denselben Bezugszeichen versehen. Die Nummerierung von Verfahrensschritten dient der Übersichtlichkeit und soll im Allgemeinen keine bestimmte zeitliche Reihenfolge implizieren. Insbesondere können auch mehrere Verfahrensschritte gleichzeitig durchgeführt werden.

### Beschreibung der Ausführungsbeispiele

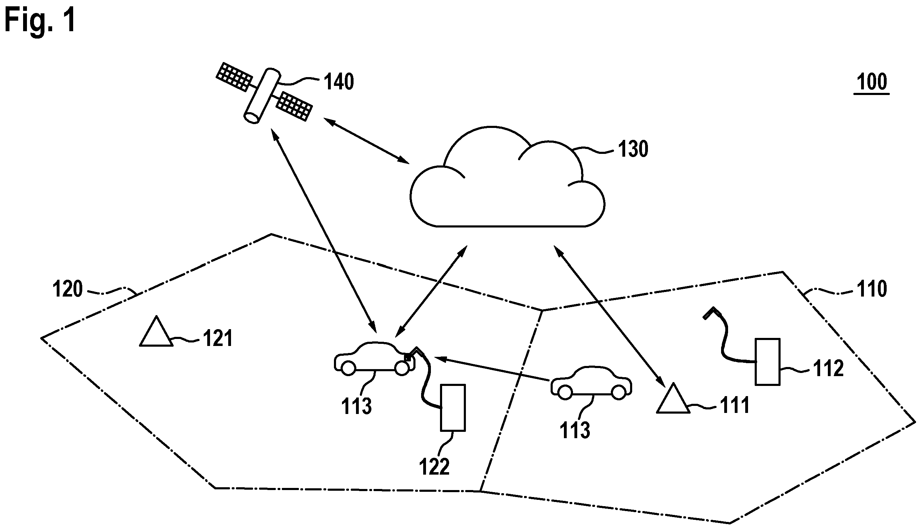

Figur 1 zeigt eine schematische Darstellung einer Vielzahl geographischer Zonen zwischen welchen sich ein Fahrzeug 113 bewegt sowie ein oder mehrere Systeme zum Überwachen einer regelkonformen Aufnahme und/oder eines regelkonformen Verbrauchs eines Energieträgers in einer der geographischen Zonen durch das Fahrzeug 113.

In dem gezeigten Beispiel umfasst die Vielzahl geographischer Zonen eine erste geographische Zone 110 und eine zweite geographische Zone 120. Eine geographische Zone kann etwa ein geographisch abgegrenzter Bereich, eine Nation, ein Gebiet eines Zusammenschlusses wie etwa ein Gebiet der Europäischen Union, oder jedes andere Gebiet sein, für welches ein spezifisches Regelwerk in Kraft ist, dessen Einhaltung für einen Verbraucher und/oder eine Autorität in dem Gebiet von Bedeutung ist.

Die erste geographische Zone 110 kann eine erste Autorität 111 umfassen. Die zweite geographische Zone 120 kann eine zweite Autorität 121 umfassen. Die Autoritäten können ein für die geographische Zone spezifisches Regelwerk definieren, dieses überwachen und oder dieses mit einer anderen Autorität teilen, zur Anwendung in einer anderen geographische Zone der anderen Autorität. Ein Regelwerk kann eine oder mehrere Regeln umfassen, wie etwa eine Regel die ein Maß bestimmt, bis zu welchem ein Fahrzeug in der geographischen Zone als CO₂-neutrales Fahrzeug gilt, wenn das Fahrzeug etwa zum Verbrauchen eines Kraftstoffs konfiguriert ist, der nicht notwendigerweise auf erneuerbarer Energie basiert.

Die erste geographische Zone 110 kann eine oder mehrere erste Vorrichtungen 112 zum Übertragen von Energie an ein Fahrzeug umfassen. Die Energie kann in Form eines zumindest teilweise oder vollständig auf erneuerbarer Energie basierenden Kraftstoffs oder elektrischer Energie bereitgestellt sein und/oder eine nicht erneuerbare Energieform sein oder auf einer solchen basieren. Generell kann die Energie einer Energiekategorie einer Vielzahl von Energiekategorien entsprechen, welche in einem ersten Regelwerk, wie etwa einem oder mehreren der oben genannten Regelwerke, mit einer oder mit mehreren ersten Regeln des ersten Regelwerks verknüpft ist.

Die zweite geographische Zone 120 kann eine oder mehrere zweite Vorrichtungen 122 zum Übertragen von Energie an ein Fahrzeug 113 umfassen. Die Energie kann in Form eines zumindest teilweise oder vollständig auf erneuerbarer Energie basierenden Kraftstoffs oder elektrischer Energie bereitgestellt sein und/oder eine nicht erneuerbare Energieform sein oder auf einer solchen basieren. Generell kann die Energie einer Energiekategorie einer Vielzahl von Energiekategorien entsprechen, welche in einem zweiten Regelwerk, wie etwa einem oder mehreren der oben genannten Regelwerke, mit einer oder mit mehreren zweiten Regeln des zweiten Regelwerks verknüpft ist.

Es kann sein, dass eine geographische Zone 110, 120 als Zone gilt, in welcher nur fossile Energieträger zur Verfügung stehen. Bei einer Aufnahme des Energieträgers durch das Fahrzeug, beispielsweise durch einen Betankungsvorgang, in der entsprechenden Zone gilt dann die gesamte aufgenommene Menge des Energieträgers als nicht erneuerbar bzw. fossil.

Das erste Regelwerk und/oder das zweite Regelwerk können in einem Speichermedium der ersten Autorität 111 und/oder der zweiten Autorität 121 und/oder des Fahrzeugs und/der einen oder der mehreren erste Vorrichtungen 112 und/der einen oder der mehreren zweiten Vorrichtungen 122 und/oder einer Cloud 130 abgespeichert sein. Das erste Regelwerk und/oder das zweite Regelwerk können für ein Fahrzeug 113 spezifisch sein, etwa in Abhängigkeit von einem Baujahr und einem im Baujahr gültigen Regelwerk.

Das erste Regelwerk oder das zweite Regelwerk kann in der ersten geographischen Zone 110 und in der zweiten geographische Zone 120 gültig sein, während in einer anderen geographischen Zone (nicht gezeigt) ein anderes oder kein Regelwerk in Kraft ist.

Das Fahrzeug 113 kann in der ersten geographische Zone 110 zum Betrieb zugelassen sein, etwa durch die Autorität 111 oder eine andere Autorität (nicht gezeigt) mit einer geographischen Zone, die Teil der geographische Zone 110 ist.

Die Masse der ersten geographischen Zone 110 und/oder das erste Regelwerk und/oder das zweite Regelwerk können in einer Steuereinheit des Fahrzeugs 113 abgespeichert sein. Alternativ oder ergänzend können die Masse der ersten geographischen Zone 110 über eine Cloud 130 oder einen Satelliten 140 etwa eines Navigationssystems mit dem Fahrzeug 113 verknüpft sein oder diesem bereitgestellt werden, etwa in Form einer Tabelle oder in Form von Navigationsdaten.

Die eine oder die mehreren ersten Vorrichtungen 112 zum Übertragen von Energie an ein Fahrzeug und/oder die eine oder die mehrere zweiten Vorrichtungen 122 zum Übertragen von Energie an ein Fahrzeug können zum Senden von Daten an das Fahrzeug 113 und/oder zum Empfangen von Daten von dem Fahrzeug 113 konfiguriert sein.

Die eine oder die mehreren ersten Vorrichtungen 112 zum Übertragen von Energie an ein Fahrzeug und/oder die eine oder die mehrere zweiten Vorrichtungen 122 zum Übertragen von Energie an ein Fahrzeug können zum Senden von Daten an die Cloud 130 und/oder den Satelliten 140 und/oder zum Empfangen von Daten von der Cloud 130 und/oder dem Satelliten 140 konfiguriert sein. Die Cloud kann zum Senden von Daten an die Autorität 111 und/oder den Satelliten 140 konfiguriert sein. Der Satellit 140 kann zum Senden von Daten an die Cloud 130 und/oder die Autorität 111 konfiguriert sein. Die Kommunikationswege können analog für die Autorität 121 implementiert sein.

Die jeweiligen Daten können eine Position und eine Zeit einer Übertragung von Energie einer Vorrichtung der ersten Vorrichtungen 112 und der zweiten Vorrichtungen 122 umfassen. Basierend auf den jeweiligen Daten kann bestimmt werden, ob eine Übertragung von Energie außerhalb oder innerhalb einer spezifischen geographischen Zone stattgefunden hat oder nicht.

Das Fahrzeug 113 kann zum Speichern der Vorgänge zum Übertragung von Energie an das Fahrzeug 113 konfiguriert sein. Das Fahrzeug 113 kann zum Speichern eines Verbrauchs, der an das Fahrzeug 113 übertragenen Energie konfiguriert sein. Das Fahrzeug 113 zum Speichern der Historie der Übertragung von Energie und/oder der Historie des Verbrauchs dieser Energie durch das Fahrzeug 113 konfiguriert sein, etwa über eine Zeitperiode wie ein oder mehrere Jahre und/oder über eine Lebensdauer des Fahrzeugs 113.

Alternativ oder ergänzend kann das Fahrzeug 113 zum Speichern der Vorgänge zum Übertragung von Energie an das Fahrzeug 113 konfiguriert sein, wenn die Vorgänge außerhalb der ersten geographischen Zone 110 erfolgt sind, wie etwa beim Fahrzeug 113 in der zweiten geographischen Zone 120. Bei einem Überschreiten einer Grenze der ersten geographischen Zone 110 kann eine Position und eine Zeit des Überschreitens abgespeichert werden, etwa als Daten, die in dem Speicher des Fahrzeugs 113 zu speichern sind. Die Daten können wie oben beschrieben an andere Komponenten des Systems gesendet und von diesen empfangen und optional weitergeleitet werden.

Durch das Überschreiten einer Grenze der geographischen Zone 110 können auch weitere Funktionen ausgelöst werden, etwa eine Bestimmung des Regelwerks der zweiten geographischen Zone 120.

Basierend auf den erfassten Zeiten des Überschreitens einer Grenze und/oder den erfassten Zeiten des Übertragens von Energie sowie den damit verknüpften Positionen kann eine Bestimmung erfolgen, welche Menge an Energie in dem Fahrzeug 113 zu einer Zeit vorhanden war, sowie eine Bestimmung, ob außerhalb der ersten geographischen Zone 110 Energie an das Fahrzeug 113 übertragen worden ist oder nicht, einschließlich einer Bestimmung der wahrscheinlichen Energiekategorie der übertragene Energie. Basierend auf den Bestimmungen kann die oben beschriebene Historie aufrechterhalten werden. Für die Bestimmungen können Navigationsdaten verwendet werden. Der Nutzer des Fahrzeuges 113 kann etwa über eine Anzeige im Fahrzeug 113 oder eine Anwendung auf einer mobilen Kommunikationsvorrichtung über eine Menge an Energie, die im Fahrzeug zu einer Zeit verfügbar ist, informiert werden.

Der Nutzer kann bspw. darüber informiert werden, dass er beim Verlassen der ersten geographischen Zone 110 eine erste Energiemenge einer ersten Energiekategorie im Fahrzeug 113 verfügbar hat. Die erste Energiemenge kann etwa in Form eines zumindest teilweise oder vollständig auf erneuerbarer Energie basierenden Kraftstoffs oder elektrischer Energie vorliegen.

Der Nutzer kann bspw. darüber informiert werden, dass er beim Eintreten in die erste geographische Zone 110 eine zweite Energiemenge einer zweiten Energiekategorie im Fahrzeug 113 verfügbar hat. Die zweite Energiemenge kann etwa in Form eines auf nicht erneuerbarer Energie basierenden Kraftstoffs oder elektrischer Energie vorliegen.

Das Fahrzeug 113 kann eine Steuervorrichtung umfassen, die konfiguriert ist zum Vergleichen der ersten Energiemenge mit der zweiten Energiemenge.

In Antwort auf eine Bestimmung, dass die erste Energiemenge größer ist als die zweite Energiemenge kann die Steuervorrichtung konfiguriert sein zum Bestimmen, dass die erste Energiemenge und/oder die zweite Energiemenge gemäß dem ersten Regelwerk zum Verfolgen der Historie des Betriebs des Fahrzeuges 113 innerhalb und/oder außerhalb der ersten geographischen Zone 110 herangezogen wird.

In Antwort auf eine Bestimmung, dass die erste Energiemenge größer ist als die zweite Energiemenge kann die Steuervorrichtung konfiguriert sein zum Bestimmen, dass die erste Energiemenge und/oder die zweite Energiemenge gemäß dem ersten Regelwerk nicht zum Verfolgen der Historie zum Betreiben des Fahrzeuges 113 innerhalb und/oder außerhalb der ersten geographischen Zone 110 herangezogen wird.

In Antwort auf eine Bestimmung, dass die erste Energiemenge kleiner ist als die zweite Energiemenge kann die Steuervorrichtung konfiguriert sein zum Bestimmen, dass die erste Energiemenge und/oder die zweite Energiemenge gemäß dem ersten Regelwerk zum Verfolgen der Historie des Betriebs des Fahrzeuges 113 innerhalb und/oder außerhalb der ersten geographischen Zone 110 herangezogen wird.

In Antwort auf eine Bestimmung, dass die erste Energiemenge kleiner ist als die zweite Energiemenge kann die Steuervorrichtung konfiguriert sein zum Bestimmen, dass die erste Energiemenge und/oder die zweite Energiemenge gemäß dem ersten Regelwerk nicht zum Verfolgen der Historie des Betriebs des Fahrzeuges 113 innerhalb und/oder außerhalb der ersten geographischen Zone 110 herangezogen wird.

Insbesondere kann in Antwort auf eine Bestimmung, dass die erste Energiemenge kleiner ist als die zweite Energiemenge die Steuervorrichtung konfiguriert sein zum Veranlassen einer Überweisung eines Kompensationsbetrags an eine Autorität gemäß dem ersten Regelwerk, etwa an die Autorität 111.

Die Steuervorrichtung oder eine andere Vorrichtung kann zum Analysieren der Historie des Betriebs des Fahrzeuges 113 konfiguriert sein. Basierend auf dem auf den Daten mit Zeiten und Position des Fahrzeugs 113 über eine Zeitperiode kann die Steuervorrichtung und/oder die andere Vorrichtung konfiguriert sein zum Ermitteln einer Wahrscheinlichkeit einer Manipulation zum Umgehen des ersten Regelwerks.

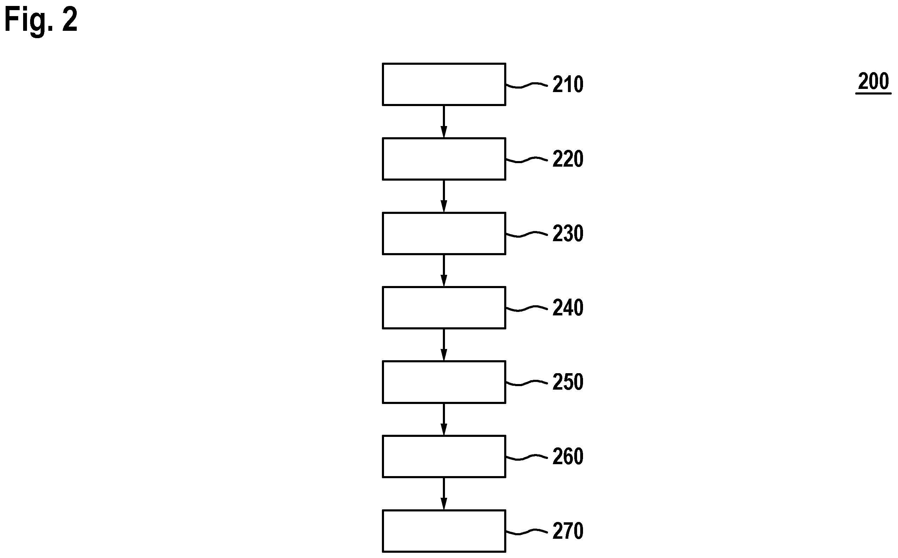

Figur 2 zeigt eine schematische Darstellung eines Verfahrens (200) zum Überwachen einer regelkonformen Aufnahme und/oder eines regelkonformen Verbrauchs eines Energieträgers in einer ersten geographischen Zone durch ein Fahrzeug, das in der ersten geographischen Zone zugelassen ist zum Betrieb gemäß einem ersten Regelwerk, das für das Fahrzeug in der ersten geographischen Zone in Kraft ist.

Das Verfahren 200 umfasst ein Speichern 210 von Massen einer ersten geographischen Zone und ein Speichern 220 von einer von mehreren ersten Regeln des ersten Regelwerks.

Das Verfahren 200 umfasst ein Erfassen 230 einer Vielzahl von Positionen eines Fahrzeugs und einer Vielzahl von Zeiten, wobei jede Position der Vielzahl von Positionen mit jeweils einer Zeit der Vielzahl von Zeiten verknüpft ist, und wobei zumindest eine Position der Vielzahl von Positionen außerhalb der ersten geographischen Zone liegt.

Das Verfahren 200 umfasst ein Speichern 240 der Vielzahl von Positionen und der Vielzahl von Zeiten als eine Historie des Fahrzeuges.

Das Verfahren 200 umfasst ein Bestimmen 250, basierend auf der Historie des Fahrzeuges, einer ersten Energiemenge einer ersten Energiekategorie, die im Fahrzeug an einer ersten Position zu einer ersten Zeit gespeichert ist.

Das Verfahren 200 umfasst ein Bestimmen 260, basierend auf der Historie des Fahrzeuges, einer zweiten Energiemenge einer zweiten Energiekategorie, die im Fahrzeug an einer zweiten Position zu einer zweiten Zeit gespeichert ist.

Das Verfahren 200 umfasst ein Bestimmen 270, basierend auf der ersten Energiemenge, der zweiten Energiemenge und der Historie des Fahrzeuges, ob eine Regel der einen oder der mehreren ersten Regeln des ersten Regelwerks während eines Betriebs des Fahrzeuges in der ersten geographischen Zone eingehalten worden ist oder nicht.

Das Erfassen 230 kann ein Erfassen einer ersten Position des Fahrzeugs beim Verlassen der ersten geographischen Zone umfassen.

Das Erfassen 230 kann ein Erfassen einer zweiten Position des Fahrzeugs beim Eintreten in die erste geographische Zone umfassen.

Das Erfassen 230 kann ein Erfassen einer dritten Position des Fahrzeugs an einer Vorrichtungen zum Übertragen von Energie an ein Fahrzeug umfassen. Die Position der Vorrichtungen zum Übertragen von Energie an ein Fahrzeug kann innerhalb oder außerhalb der erste geographische Zone sein.

Das Erfassen 230 kann durch das Fahrzeug und/oder durch eine Vorrichtungen zum Übertragen von Energie und/oder durch eine zellulare Kommunikationsvorrichtung und/oder durch einen satellitengestützte Kommunikationsvorrichtung erfolgen.

Die Historie des Fahrzeuges kann basierend auf dem Erfassen 230 in einer oder in mehreren Vorrichtungen zusammengeführt werden, etwa im Fahrzeug und/oder in einer Cloud.

## Patentansprüche

1. Verfahren (200) zum Überwachen einer regelkonformen Aufnahme und/oder eines regelkonformen Verbrauchs eines Energieträgers in einer ersten geographischen Zone durch ein Fahrzeug, das in der ersten geographischen Zone zugelassen ist zum Betrieb gemäß einem ersten Regelwerk, das für das Fahrzeug in der ersten geographischen Zone in Kraft ist, wobei das Verfahren (200) umfasst:
Speichern (210) von Massen einer ersten geographischen Zone;
Speichern (220) von einer von mehreren ersten Regeln des ersten Regelwerks;
Erfassen (230) einer Vielzahl von Positionen eines Fahrzeugs und einer Vielzahl von Zeiten, wobei jede Position der Vielzahl von Positionen mit jeweils einer Zeit der Vielzahl von Zeiten verknüpft ist, und wobei zumindest eine Position der Vielzahl von Positionen außerhalb der ersten geographischen Zone liegt;
Speichern (240) der Vielzahl von Positionen und der Vielzahl von Zeiten als eine Historie des Fahrzeuges;
Bestimmen (250), basierend auf der Historie des Fahrzeuges, einer ersten Energiemenge einer ersten Energiekategorie, die im Fahrzeug an einer ersten Position zu einer ersten Zeit gespeichert ist;
Bestimmen (260), basierend auf der Historie des Fahrzeuges, einer zweiten Energiemenge einer zweiten Energiekategorie, die im Fahrzeug an einer zweiten Position zu einer zweiten Zeit gespeichert ist;
Bestimmen (270), basierend auf der ersten Energiemenge, der zweiten Energiemenge und der Historie des Fahrzeuges, ob eine Regel der einen oder der mehreren ersten Regeln des ersten Regelwerks während eines Betriebs des Fahrzeuges in der ersten geographischen Zone eingehalten worden ist oder nicht.

2. Verfahren (200) nach Anspruch 1, wobei das Erfassen (230) ein Erfassen einer ersten Position des Fahrzeugs beim Verlassen der ersten geographischen Zone umfasst.

3. Verfahren (200) nach Anspruch 1 oder 2, wobei das Erfassen (230) ein Erfassen einer zweiten Position des Fahrzeugs beim Eintreten in die erste geographische Zone umfasst.

4. Verfahren (200) nach irgendeinem der Ansprüche 1 bis 3, wobei das Erfassen (230) ein Erfassen einer dritten Position des Fahrzeugs an einer Vorrichtung zum Übertragen von Energie an ein Fahrzeug umfasst.

5. Verfahren (200) nach Anspruch 4, wobei die Position der Vorrichtung zum Übertragen von Energie an ein Fahrzeug innerhalb oder außerhalb der ersten geographischen Zone liegt.

6. Verfahren (200) nach Anspruch 5, wobei die Position der Vorrichtung zum Übertragen von Energie an ein Fahrzeug außerhalb der ersten geographischen Zone liegt, Kategorisieren der übertragenen Energie als fossile Energie.

7. Verfahren (200) nach irgendeinem der Ansprüche 1 bis 6, wobei das Erfassen (230) durch das Fahrzeug und/oder durch eine Vorrichtung zum Übertragen von Energie und/oder durch eine zellulare Kommunikationsvorrichtung und/oder durch einen satellitengestützte Kommunikationsvorrichtung erfolgt.

8. Verfahren (200) nach irgendeinem der Ansprüche 1 bis 7, wobei die Historie des Fahrzeuges basierend auf dem Erfassen (230) in einer oder in mehreren Vorrichtungen zusammengeführt wird, insbesondere im Fahrzeug und/oder in einer Cloud.

9. Verfahren (200) nach irgendeinem der Ansprüche 1 bis 8, wobei in Antwort auf eine Bestimmung, dass die erste Energiemenge kleiner ist als die zweite Energiemenge das Verfahren umfasst:
Bestimmen, dass die erste Energiemenge und/oder die zweite Energiemenge gemäß dem ersten Regelwerk zum Verfolgen der Historie des Betriebs des Fahrzeuges innerhalb und/oder außerhalb der ersten geographischen Zone herangezogen wird; oder
Bestimmen, dass die erste Energiemenge und/oder die zweite Energiemenge gemäß dem ersten Regelwerk nicht zum Verfolgen der Historie des Betriebs des Fahrzeuges innerhalb und/oder außerhalb der ersten geographischen Zone herangezogen wird.

10. Computerlesbares Speichermedium, das darauf gespeicherte Instruktionen umfasst, die, wenn sie durch einen oder durch mehrere Prozessoren eines Systems ausgeführt werden, das System dazu veranlassen das Verfahren nach irgendeinem de Ansprüche 1 bis 9 durchzuführen.

11. System (100), wobei das System (100) umfasst:
ein Fahrzeug (113), das in der ersten geographischen Zone (110) zugelassen ist zum Betrieb gemäß einem ersten Regelwerk, das für das Fahrzeug (113) in der ersten geographischen Zone (110) in Kraft ist;
eine oder mehrere Steuervorrichtungen mit einem oder mit mehreren Prozessoren; und
das computerlesbare Speichermedium nach Anspruch 10.
